Europäisches Patentamt

European Patent Office

Office européen des brevets

(11) Veröffentlichungsnummer: **0 580 051 A1**

## EUROPÄISCHE PATENTANMELDUNG

(21) Anmeldenummer: **93111106.6**

(22) Anmeldetag: **12.07.93**

(51) Int. Cl.5: **C08L 25/04**, C08L 23/02,
//(C08L25/04,23:02,53:02)

(30) Priorität: **21.07.92 DE 4223982**

(43) Veröffentlichungstag der Anmeldung:
**26.01.94 Patentblatt 94/04**

(84) Benannte Vertragsstaaten:
**BE DE ES FR GB IT NL**

(71) Anmelder: **BASF Aktiengesellschaft
Carl-Bosch-Strasse 38
D-67063 Ludwigshafen(DE)**

(72) Erfinder: **Seelert, Stefan, Dr.
Mathaeus-Merian-Ring 24a
D-6710 Frankenthal(DE)**
Erfinder: **Hoenl, Hans, Dr.
Hauptstrasse 69a
D-6719 Obersuelzen(DE)**
Erfinder: **Schwaben, Hans-Dieter, Dr.
Lindenstrasse 6a
D-6721 Freisbach(DE)**

(54) **Thermoplastische Formmasse mit einem auch bei variierender Zusammensetzung guten Zähigkeits-Steifigkeits-Verhältnis.**

(57) Thermoplastische Formmasse, bestehend aus, jeweils bezogen auf die Summe der Bestandteile A, B, C und D,

A: 5 bis 94 Gew.-% Styrol und/oder substituieres Styrol enthaltendem Polymerisat A,

B: 5 bis 94 Gew.-% Polyolefin B,

C: 1 bis 20 Gew.-% eines durch anionische Polymerisation hergestellten, selektiv hydrierten oder teilhydrierten Blockcopolymerisats C, das aus mindestens einem aus Styrol aufgebauten Block und mindestens einem vor der Hydrierung Isopren enthaltenden Block besteht und dessen Styrol-Gehalt zwischen 45 und 85 Gew.-% liegt, und

D: bis 19 Gew.-% eines weiteren durch anionische Polymerisation aus Styrol und Butadien und/oder Isopren hergestellten Blockcopolymerisats D mit mehr als zwei Blockeinheiten.

EP 0 580 051 A1

Polystyrol und Polyolefine sind Polymere, die auf molekularer Ebene nicht miteinander mischbar sind. Durch Zugabe sogenannter Verträglichkeitsvermittler ist es jedoch möglich, Polymermischungen mit brauchbaren Eigenschaftskombinationen zu erhalten. Geeignete Verträglichkeitsvermittler für Mischungen aus Polystyrol und Polyolefinen sind aus vinylaromatischen Monomeren und Dienkohlenwasserstoffen aufgebaute Blockcopolymere, in denen der von den Dienkohlenwasserstoffen stammende Teile auch selektiv hydriert oder teilhydriert sein kann. Die daraus resultierenden Polymermischungen (Blends) sind Formmassen, die die gute Spannungsrißbeständigkeit und die gute Wasserdampfundurchlässigkeit der Polyolefine mit der guten Verarbeitbarkeit des Polystyrols in sich vereinen.

Aus z.B. der DE-PS 2 003 916 sind Blockcopolymerisate des Typs X-Y und X-Y-X bekannt, wobei X ein Styrolpolymerisat und Y ein Polydien bedeutet, das ganz oder teilweise hydriert sein kann.

In der EP-A-60 524 werden Mischungen aus Polypropylen und schlagfestem Polystyrol mit linearem S-(D-S)$_n$ Blockcopolymerisat beschrieben, wobei S Styrol, D Butadien oder Isopren und n eine ganze Zahl bedeutet. Blends aus HDPE und schlagfestem Polystyrol mit einem solchen S-(D-S)$_n$ Blockcopolymerisat werden in EP 60 525 genannt, wobei wiederum S Styrol und n eine ganze Zahl bedeutet, D aber Isopren oder hydriertes Butadien darstellt. Danach ist der Styrolgehalt der Blockcopolymeren auf jeweils unter 50 Gew.-% beschränkt.

Für füllstoffhaltige Blends aus Styrolpolymerisaten und Polyolefinen, in denen die Polyolefinkomponente eine Mischung aus Polyethylen und Polypropylen ist und der Gehalt an Styrolpolymerisat unter 40 Gew.-% liegt, werden in EP 156 072 Styrol-Butadien-Styrol- und Styrol-Isopren-Styrol-Dreiblockcopolymerisate bzw. deren hydrierte Produkte beansprucht.

In einer Reihe von Schriften wie z.B. EP 125 227, EP 310 051, EP 329 283, EP 421 359 oder US 4 495 323 werden sternförmige, aus Butadien und Styrol aufgebaute Blockcopolymerisate als Verträglichkeitsvermittler in Blends aus Polystyrol und Polyolefinen angegeben.

Spezielle lineare Blockcopolymerisate für den Einsatz in Polystyrol-Polyolefin-Mischungen werden in EP 250 970, in der nicht vorveröffentlichten deutschen Patentanmeldung P 4 139 827.0 und im Derwent-Referat 89-238928/33 der JA-A-174 550/89 angegeben.

Ein weiterer Weg, um Blends aus Polystyrol und Polyolefinen mit verbesserten Produkteigenschaften herzustellen, besteht darin, als Verträglichkeitsvermittler Mischungen aus Blockcopolymeren einzusetzen. Solch ein Ansatz wird z.B. in EP 402 340 beschrieben.

Alle diese oben aufgeführten Blockcopolymerisate sind Verträglichkeitsvermittler für Polystyrol-Polyolefin-Mischungen, d.h. durch die Zugabe dieser Blockcopolymere zu einer Polymermischung aus Polystyrol und Polyolefinen wird die Zähigkeit der Mischung, verglichen mit der einer entsprechenden Mischung ohne Blockcopolymer, verbessert. Ein Nachteil vieler dieser Blockcopolymerisate ist es aber, daß bei weitem nicht die Zähigkeits- und Steifigkeitswerte erreicht werden, die für viele Anwendungen benötigt werden.

Mit manchen der oben genannten Verträglichkeitsvermittler ergeben sich für bestimmte Polystyrol-Polyolefin-Blends ausreichende Zähigkeits-Steifigkeits-Verhältnisse. So sind für Polystyrol-Polyethylen-Mischungen die in EP 310 051, EP 329 283 und EP 421 359 genannten Sternblockcopolymerisate und vor allem die in der o.a. DE-Patentanmeldung P 41 39 827.0 beschriebenen linearen Blockcopolymerisate recht gut geeignet. Für Polystyrol-Polypropylen-Mischungen haben sich besonders die in EP 250 970 beanspruchten Strukturen bewährt. Ein Nachteil dieser Verträglichkeitsvermittler ist aber, daß sie nur jeweils in Polystyrol-Polyethylen- oder Polystyrol-Polypropylen-Mischungen eine ausreichende Wirkung zeigen.

Es ist offensichtlich, daß es erhebliche Vorteile mit sich bringen würde, wenn ein in allen Blends aus Polystyrol und verschiedenen Polyolefinen wirkender Verträglichkeitsvermittler zur Verfügung stünde.

Nicht nur würde es die Herstellung von Polystyrol-Polyolefin-Blends mit verschiedenen Polyolefin-Komponenten, aber mit identischem Verträglichkeitsvermittler ermöglichen (mit allen Polyolefin-Komponenten ergeben sich Formmassen mit guter Spannungsrißbeständigkeit und guter Wasserdampfundurchlässigkeit). Vorteile ergäben sich mit einem solchen für alle Polyolefin-Typen wirkenden Universal-Verträglichkeitsvermittler vor allem bei der Wiederaufarbeitung von Polymermischungen. Besonders im Bereich der Lebensmittelverpackungen fallen sowohl als Produktionsabfälle beim Kunststoffverarbeiter als auch beim Verbraucher Gemische aus Polystyrol und unterschiedlichen Polyolefinen an. Mit einem Universal-Verträglichkeitsvermittler wäre es jetzt möglich, aus allen diesen Gemischen mit einem einzigen Zusatzstoff wiederum Formmassen mit guten Eigenschaften zu fertigen. Außerdem könnten auch ohne genaue Kenntnis der Zusammensetzung der Polymermischung Werkstoffe mit ausreichenden Eigenschaftskombinationen hergestellt werden.

Es wurde nun gefunden, daß sowohl, wenn Polystyrol und Polyethylen als auch, wenn Polystyrol und Polypropylen gemischt werden sollen, Formmassen mit ausgezeichneten Eigenschaften erhalten werden, sofern als Verträglichkeitsvermittler ein selektiv hydriertes oder teilhydriertes Blockcopolymerisat eingesetzt wird, das aus mindestens einem aus Styrol aufgebauten Block und mindestens einem vor der Hydrierung Isopren enthaltenden Block besteht und dessen Styrol-Gehalt zwischen 45 und 85 Gew.-% liegt. Formmassen mit entsprechend guten Eigenschaften werden auch erhalten, wenn dieses Blockcopolymerisat in Mischungen mit anderen Blockcopolymerisaten eingesetzt wird. In Polystyrol-Polypropylen-Mischungen zeigen die erfindungsgemäßen Verträglichkeitsvermittler bzw. Verträglichkeitsvermittler-Mischungen sogar eine Wirkung, die die der z.B. in EP 60 524 und EP 250 970 beschriebenen Blockcopolymere deutlich übertrifft.

Unmittelbarer Erfindungsgegenstand ist daher eine thermoplastische Formmasse, die enthält, jeweils bezogen auf die Summe aus A, B, C und D

A: 5 bis 94 Gew.-% Styrol und/oder substituiertes Styrol enthaltenden Polymerisat A,

B: 5 bis 94 Gew.-% Polyolefin B,

C: 1 bis 20 Gew.-% eines durch anionische Polymerisation hergestellten, selektiv hydrierten oder teilhydrierten Blockcopolymerisats C, das aus mindestens einem aus Styrol aufgebauten Block und mindestens einem vor der Hydrierung Isopren enthaltenden Block besteht und dessen Styrol-Gehalt zwischen 45 und 85 Gew.-% liegt, und

D: bis 19 Gew-% eines weiteren durch anionische Polymerisation aus Styrol und Butadien und/oder Isopren hergestellten Blockcopolymerisats D.

Als Komponente A der erfindungsgemäßen Formmassen kommen sowohl Homo- als auch Copolymerisate von Styrol und/oder substituierten Styrolen in Betracht. Substituierte Styrole sind vorzugsweise methylsubstituierte Styrole, in denen ein Methylrest als Substituent am aromatischen Ring oder an der Seitenkette vorhanden ist. Hier sind vor allem p-Methylstyrol und $\alpha$-Methylstyrol zu nennen. Die Homo- oder Copolymerisate können in bekannter Weise in Masse, Lösung oder Suspension hergestellt werden.

Als Komponente A der erfindungsgemäßen Formmassen kommen auch schlagzäh modifizierte Styrolpolymerisate in Frage. Diese Pfropfcopolymerisate werden durch Polymerisation von Styrol und/oder substituierten Styrolen in Gegenwart eines Kautschuks hergestellt. Als Kautschuk werden zur Schlagzämodifizierung von Styrolpolymerisaten geeignete natürliche oder synthetische Kautschuke eingesetzt. Als Kautschuke im Sinne der Erfindung kommen außer Naturkautschuk z.B. Polybutadien, Polyisopren und Mischpolymerisate des Butadiens und/oder Isoprens mit Styrol und anderen Comonomeren, die eine Glastemperatur unter -20°C (nach K.H. Illers und H. Breuer, Kolloidzeitschrift 176 (1961) S. 110) besitzen. Besonders eignen sich Butadienpolymerisate mit einem 1,4-cis-Gehalt, der zwischen 25 und 99 Gew.-% liegt. Es können aber auch Acrylkautschuke, EPDM-, Polybutylen- und Polyoctenamerkautschuke eingesetzt werden. Der mit Styrol gepfropfte Kautschuk (Weichphase) liegt dabei fein verteilt in der als Hartmatrix bezeichneten Polystyrolphase vor. Der Kautschukgehalt kann zwischen 3 und 25 Gew.-%, vorzugsweise zwischen 5 und 15 Gew.-%, bezogen auf A, betragen.

Die Verfahren zur Herstellung von Styrolpolymerisaten sind bekannt und werden z.B. in "Ullmanns Encyklopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

Polystyrol, substituierte Polystyrole und schlagzäh modifizierte Polystyrole sind im Handel erhältlich. Die Viskositätszahl der Styrolpolymerisate A, bzw. im Fall der schlagzäh modifizierten Polystyrole, der Hartmatrix, soll zwischen 50 und 130 ml/g (gemessen in 0,5 %iger Lösung in Toluol bei 23°C) liegen.

Der Anteil des Polymeren A an der erfindungsgemäßen Formmasse beträgt mindestens 5, bevorzugt 25 bis 80 Gew.-% und insbesondere 40 bis 70 Gew.-%.

Als Polyolefin B kommen alle schmelzbaren Homo- oder Co-Polymerisate von $\alpha$-Olefinen mit 2 bis 10 Kohlenstoffatomen oder deren Mischungen in Frage. Bevorzugt sind $\alpha$-Olefine mit 2 bis 6 Kohlenstoffatomen. Die Polyolefine können sich ableiten von unverzweigten $\alpha$-Olefinen wie 1-Buten, 1-Penten, 1-Hexen, 1-Hepten, 1-Octen und bevorzugt Ethylen sowie Propylen. Weiter kommen $\alpha$-Olefine mit verzweigten Alkyl- oder Cycloalkyl-Resten wie 3-Methyl-1-en, 4-Methylpent-1-en oder Vinylcyclohexan sowie Vinylcyclopentan in Frage.

Bevorzugt wird Polypropylen, das z.B. nach dem Gasphasenverfahren hergestellt worden ist und einen Schmelzflußindex (MFI 190/5) von 0,1 bis 90 g/10 min aufweist. Gut geeignet ist auch Polyethylen, hergestellt nach dem Hoch-, Mittel- oder Niederdruckverfahren mit einer Dichte zwischen 0,91 und 0,97 g/cm$^3$. Der Schmelzflußindex der Ethylenpolymerisate kann in einem weiten Bereich schwanken und beträgt vorzugsweise 0,5 bis 40 g/10 min (MFI 190/2, 16).

In Frage kommen auch Copolymerisate von Ethylen oder Propylen z.B. mit Vinylestern wie Vinylacetat oder Vinylpropionat, mit Acrylestern oder untereinander. Der Comonomerengehalt der Copolymerisate liegt zwischen 1 und 65 Gew.-%, vorzugsweise zwischen 10 und 45 Gew.-%. Der Schmelzflußindex der Copolymerisate kann in einem weiten Bereich schwanken und beträgt vorzugsweise 0,5 bis 40 g/10 min (MFI 190/2, 16). Die Copolymerisate können als Impact-Copolymerisate, Blockcopolymerisate, Random-Copolymerisate oder thermoplastischen Olefin-Elastomere (TPO) vorliegen.

Die Verfahren zur Herstellung geeigneter Polyolefine sind bekannt und werden z.B. in "Ullmanns Encyklopädie der technischen Chemie", 4. Auflage, Band 19, Seiten 167 bis 226, Verlag Chemie, Weinheim beschrieben.

Der Gehalt der erfindungsgemäßen Formmasse an Polyolefin B soll mindestens 5, bevorzugt 15 bis 70 Gew.-% und insbesondere 25 bis 55 Gew.-% betragen.

Blockcopolymer C ist ein durch anionische Polymerisation hergestelltes, selektiv hydriertes oder teilhydriertes Blockcopolymerisat, das aus mindestens einem aus Styrol aufgebauten Block X und mindestens einem vor der Hydrierung Isopren enthaltenden Block Y besteht, und dessen Styrol-Gehalt zwischen 45 und 85 Gew.-% liegt. Es kommen lineare, verzweigte und radiale Blockcopolymere in Frage. Lineare Blockcopolymere können Dreiblöcke X-Y-X oder Multiblöcke X-(Y-X)$_n$ sein, wobei n eine ganze Zahl zwischen 2 und 10 ist. Radiale Blockcopolymere haben den Aufbau (X-Y)$_n$-Z bzw. (X-Y-X)$_n$-Z, wobei Z ein mehrfunktionelles Kupplungsmittel ist. Die Übergänge zwischen den einzelnen Blöcken können scharf oder verschmiert sein. Als Komponente C der erfindungsgemäßen Formmasse kann auch ein Gemisch solcher Blockcopolymerisate verwendet werden.

Bevorzugt werden Sternblockcopolymere und besonders bevorzugt Dreiblockcopolymere X-Y-X eingesetzt. Die Dreiblock-Copolymerisate X-Y-X sind bevorzugt symmetrisch aufgebaut, es ist aber auch möglich, daß sich die beiden Styrolblöcke X im Molekulargewicht unterscheiden und einer oder beide Übergänge zwischen den Blöcken oder verschmiert sind.

Bei der Polymerisation des Blocks X des Blockcopolymerisats C ist es möglich, anstelle von Styrol ein Gemisch aus Styrol und substituierten Styrolen einzusetzen. Als substituierte Styrole kommen vorzugsweise methylsubstituierte Styrole und insbesondere p-Methylstyrol oder $\alpha$-Methylstyrol in Frage. Bevorzugt wird ausschließlich Styrol eingesetzt. Der Block Y des Blockcopolymerisats C soll zu mindestens 45 Gew.-% aus dem Monomer Isopren aufgebaut worden sein. Der restliche Anteil des Blocks Y ist ein anderer Dienkohlenwasserstoff, bevorzugt Butadien. Besonders bevorzugt ist Block Y ausschließlich aus Isopren aufgebaut worden. Nach der Polymerisation werden die entstehenden Vorprodukte des Blockcopolymerisats C selektiv hydriert oder teilhydriert, wobei lediglich die von den Monomerenbausteinen Isopren bzw. den weiteren eingebauten Dienkohlenwasserstoffen herrührenden Doppelbindungen abgesättigt werden. Derartige Verfahren sind an sich bekannt und können z.B. nach dem in DE-OS 27 48 884 beschriebenen Verfahren durchgeführt werden. Die im Vorprodukt vorliegenden Doppelbindungen sollen im Blockcopolymerisat C zu mehr als 50 %, bevorzugt zu mehr als 90 % und besonders bevorzugt zu mehr als 97 % abgesättigt sein.

Das Molekulargewicht $M_w$ der Blockcopolymeren C beträgt zwischen 30 000 und 300 000, vorzugsweise zwischen 50 000 und 200 000, insbesondere zwischen 80 000 und 120 000.

Die Herstellung von Blockcopolymerisaten durch anionische Polymerisation ist allgemein bekannt. Sie erfolgt in der Regel in organischen Lösungsmitteln mit lithiumorganischen Verbindungen im Temperaturbereich zwischen -20 und 100 °C bei Drücken, die ausreichend sind, um die Existenz einer flüssigen Phase zu gewährleisten.

In der erfindungsgemäßen Formmasse soll das Blockcopolymerisat C mit zwischen 1 und 20 Gew.-% enthalten sein. Bevorzugt liegt der Gehalt zwischen 4 und 10 Gew.-%. In einer weiteren Ausführungsform, bei Anwesenheit eines weiteren Blockcopolymerisats D, ist der bevorzugte Anteil an Komponente C zwischen 1 und 5 Gew.-%.

Die guten verträglichkeitsvermittelnden Eigenschaften der Komponente C bleiben auch dann erhalten, wenn als Verträglichkeitsvermittler eine Mischung aus Blockcopolymerisat C und einem weiteren Blockcopolymeren D eingesetzt wird. D.h. die erfindungsgemäße Formmasse kann als weitere Komponente zusätzliches Blockcopolymerisat D enthalten.

Als Blockcopolymerisat D können aus vinylaromatischen Monomeren und Dienkohlenwasserstoffen aufgebaute Blockcopolymerisate mit mehr als zwei Blockeinheiten eingesetzt werden. Das Copolymerisat D kann ganz oder teilweise hydriert sein. Es kann alle auch für das Blockcopolymerisat C in Frage kommenden Strukturen aufweisen und z.B. als Multiblockcopolymerisat (X-Y)$_n$ vorliegen. Auch ist es möglich, Mischungen verschiedener Blockcopolymerisate als Komponente D zu verwenden.

Bevorzugt werden dabei Verbindungen gewählt, die in bestimmten Polystyrol-Polyolefin-Mischungen gute Wirksamkeit aufweisen. Besonders bevorzugt sind die in der nicht vorveröffentlichten deutschen Patentanmeldung P 41 39 827.0 beschriebenen, unsymmetrischen Styrol-Butadien-Styrol-Blockcopolymerisate.

Der Gehalt der Komponente D in der erfindungsgemäßen Formmasse ist zwischen 0 und 19 Gew.-%. Der bevorzugt Gehalt liegt, falls in der erfindungsgemäßen Formmasse jBlockcopolymerisat D enthalten ist, zwischen 4 und 10 Gew.-%.

In untergeordneten Mengen bis z.B. 30 Gew.-% kann die erfindungsgemäße Formmasse weitere Polymere wie z.B. Polyester, Polyacrylate, Polyvinylchlorid, Styrolcopolymere, Polyamide, Polycarbonate oder Polyphenylenether enthalten.

Die erfindungsgemäße Formmasse kann zur weiteren Verbesserung der Eigenschaften Hilfs- oder Zusatzstoffe enthalten, die für die Komponenten A, B, C und D üblich und gebräuchlich sind. Bei diesen Zusatzstoffen handelt es sich z.B. um Hitze- oder Lichtstabilisatoren, Gleit- oder Entformungsmittel, Schmiermittel, Antistatika, Färbemittel wie Farbstoffe oder Pigmente, Flammschutzmittel oder Verstärkungsmaterialien. Die Zusatzstoffe können bei der Vermischung von A, B, C und D zugegeben werden, sie können aber auch schon in A, B, C oder D enthalten gewesen sein.

Die Herstellung der Formmassen erfolgt durch Mischen der Komponenten nach allen bekannten Verfahren. Vorzugsweise geschieht das Vermischen der Komponenten bei höheren Temperaturen, z.B. in der Schmelze, durch gemeinsames Verwalzen, Kneten oder Extrudieren in einem Ein- oder Zweischneckenextruder.

Die zur Charakterisierung der Mischungen verwendeten Parameter wurden wie folgt bestimmt:

- Die Streckspannung und Reißdehnung nach DIN 53 443
- Der Zug-Elastizitätsmodul nach DIN 53 457
- Die multiaxiale Zähigkeit als Durchstoßarbeit (Gesamtarbeit $W_{ges}$) nach DIN 53 443
- Die Viskositätszahl (VZ) nach DIN 51 562 Teil 1 bei den jeweils genannten Bedingungen
- Das Gewichtsmittel $\overline{M}_w$ durch Gelpermeationschromatographie mit einer Kombination von Ultrastyragel®-Säulen und THF als Elutionsmittel gegen eine Eichung mit Polystyrol-Standards

Weitere Angaben sind bei den jeweiligen Mischungspartnern gemacht.

Beispiele

Für die Herstellung der erfindungsgemäßen Formmassen und der Vergleichsmassen wurden folgende Bestandteile verwendet:

Komponente A:

A    Schlagfestes Polystyrol mit einem Polybutadiengehalt von 8 %, einem mittleren Teilchendurchmes-ser ($d_{50}$ der integralen Masseverteilung) von 2,7 $\mu$m, enthaltend 0,12 Gew.-% eines sterisch gehinderten Phenols als Antioxydans. Die VZ der Hartmatrix beträgt 70 ml/g (0,5 %ig in Toluol bei 23 °C).

Komponente B:

B1    LLDPE Lupolen® L 3020 GN der BASF AG (Dichte 0,930 g/cm³ nach DIN 53 479);

B2    HDPE Lupolen 5661 B der BASF AG (Dichte 0,956 g/cm³ nach DIN 53 479; MFI (190/21,6) zwischen 8 und 11 g/10 min nach DIN 53 735).

B3    PP-Homopolymerisat Novolen® 1325 M der BASF AG, MVI (230/2,16) 11 ml/10 min, ataktischen Anteil ca. 15 Gew.-% (bestimmt als xylollöslicher Anteil bei Standardbedingungen).

B4    PP-Homopolymerisat Novolen 1100 L der BASF AG, MVI (230/2,16) 7 ml/10 min, ataktischen Anteil ca. 3 Gew.-% (bestimmt als xyllollöslicher Anteil bei Standarbedingungen).

Komponente C

C1    Selektiv hydriertes Styrol-Isopren-Styrol-Dreiblockcopolymerisat mit einem Gesamtstyrol-Gehalt von 65 Gew.-%. Es weist außenliegende gleichlange Styrolblöcke auf. $M_w$ = 79 000. (Handelsname Septon® 2104).

C2    Selektiv hydrieres Styrol-Isopren-Styrol-Dreiblockcopolymerisat mit einem Gesamtstyrol-Gehalt von 50 Gew.-%. Es weist außenliegende gleichlange Styrolblöcke auf. $M_w$ = 240 000. (Handelsname Septon 2105). $M_w$ = 108 000 (Handelsname Septon 2103).

C3    Selektiv hydriertes Styrol-Isopren-Styrol-Dreiblockcopolymerisat mit einem Gesamtstyrol-Gehalt von 50 Gew.-%. Es weist außenliegende gleichlange Styrolblöcke auf.

C4    Selektiv hydriertes Styrol-Isopren-Styrol-Dreiblockcopolymerisat mit einem Gesamtstyrol-Gehalt von 28 Gew.-%. Es weist außenliegende gleichlange Styrolblöcke auf. $M_w$ = 97 000. (Handelsname Septon 4033; zum Vergleich).

C5    Selektiv hydriertes Styrol-Dreiblockcopolymerisat mit einem Gesamtstyrol-Gehalt von 29 Gew.-%. Es weist außenliegende gleichlange Styrolblöcke auf. $M_w$ = 111 000. (Handelsname Kraton® G 1650; zum Vergleich).

C6     Polymodal aufgebautes Styrol-Butadien-Sternblockcopolymerisat mit einem Gesamtstyrol-Gehalt von ca. 75 Gew.-%. $M_w$ = 200 000. (Handelsname Styrolux® 684 D; zum Vergleich).

C7     Styrol-Butadien-Styrol-Dreiblockcopolymerisat mit einem Gesamtstyrol-Gehalt von ca. 72 Gew.-% und unsymmetrischem Aufbau. $M_w$ = 90 000. (Handelsname Finaclear® 520; zum Vergleich).

C8     Selektiv hydriertes Styrol-Butadien-Blockcopolymerisat mit einem Gesamtstyrol-Gehalt von 53 Gew.-% (Rest 47 Gew.-% Butadien). Diese 53 Gew.-% sind aufgeteilt in 10 Gew.-% in Form von Blockstyrol und in 43 Gew.-% in obengenannten 47 Gew.-% Butadien statistisch verteilt (zum Vergleich).

C9     Selektiv hydriertes Styrol-Isopren-Zweiblockcopolymerisat mit einem Gesamtstyrol-Gehalt von 50 Gew.-%. ($M_w$ = 164 000; Handelsname Septon 1050)

C10    Mischung aus C1 und, als erfindungsgemäßer Komponente D, C7 im Verhältnis 1 : 1.

C11    Mischung aus C1 und, als erfindungsgemäßer Komponente D, C7 im Verhältnis 1 : 3.

Hilfs- bzw. Zusatzstoffe

Die Bestandteile wurden jeweils mit der Komponente A als Vormischung eingebracht, wobei als Antioxydans ein handelsübliches sterisch gehindertes Phenol (Irganox® 1076 der Firma Ciba-Geigy) verwendet wurde.

Die Formmassen wurden auf einem Zweischneckenextruder ZSK 30 der Fa. Werner & Pfleiderer bei 210°C mit einem Durchsatz von 10 kg/h gemischt. Ihre Eigenschaften wurden an bei 200°C gepreßten und an bei 230°C gespritzten Formkörpern bestimmt.

Die in den Tabellen 1 und 2 aufgeführten Beispiele zeigen, daß die erfindungsgemäßen Formmassen bei Einsatz von Polyethylenen als Polyolefin-Komponente B ein sehr gutes Zähigkeits-Steifigkeitsverhältnis aufweisen. Die Eigenschaften sind zumindest ebensogut wie die der unter Einsatz der Blockcopolymere C6 und C7 (Vergleichsversuche V3, V4 und V7) hergestellten Formmassen. Bei den Vergleichsversuchen V1, V2 und V5 läßt vor allem die Steifigkeit der gepreßten Probekörper zu wünschen übrig.

Vergleichsversuch V6 demonstriert, daß auch der Aufbau der Komponenten C relevant ist, und daß mit einem Zweiblockcopolymerisat nur Formmassen mit ungenügender Zähigkeit hergestellt werden können.

Die in den Tabellen 3 und 4 zusammengestellten Resultate zeigen, daß bei Polymermischungen, die Polypropylen als Polyolefin-Komponente B enthalten, die erfindungsgemäßen Formmassen die in den Vergleichsversuchen V8, V9 und V11 aufgeführten Massen besonders in der Zähigkeit und die in den Vergleichsversuchen V10 und V12 beschriebenen Massen beschrieben Massen besonders in der Steifigkeit übertreffen.

Den Vergleichsbeispielen V1 und V8 ist zu entnehmen, daß erfindungsgemäß der Styrolgehalt größer als 45 Gew.-% sein muß.

Die in Tabelle 5 aufgeführten Beispiele und Vergleichsversuchen illustrieren, daß auch dann erfindungsgemäße Formmassen mit guter Zähigkeit hergestellt werden können, wenn als Polyolefin B eine Mischung verschiedener Polyolefine eingesetzt wird.

Zusammensetzung und Eigenschaften der erfindungsgemäßen
und nicht erfindungsgemäßen Formmassen

Tabelle 1

| Beispiel<br>Vergleichsversuch | 1 | 2 | 3 | 4 | 5 | V1 | V2 | V3 | V4 | V5 | V6 |
|---|---|---|---|---|---|---|---|---|---|---|---|
| Komponente [Gew.-%] | A  53 | A  53 | A  53 | A  53 | A  53 | A  53 | A  53 | A  53 | A  53 | A  53 | A  53 |
| Komponente [Gew.-%] | B1  41 | B1  41 | B1  41 | B1  41 | B1  41 | B1  41 | B1  41 | B1  41 | B1  41 | B1  41 | B1  41 |
| Komponente [Gew.-%] | C1  6 | C2  6 | C3  6 | C10 6 | C11 6 | C4  6 | C5  6 | C6  6 | C7  6 | C8  6 | C9  6 |
| Zug-E-Modul, gepreßt [N/mm$^2$] | 980 | 900 | 750 | 800 | 880 | 600 | 640 | 890 | 880 | 520 | 780 |
| Streckspannung, gepreßt [N/mm$^2$] | 18 | 17 | 16 | 19 | 19 | 15 | 15 | 19 | 19 | 14 | 12 |
| Reißdehnung, gepreßt [%] | 118 | 67 | 54 | 142 | 135 | 49 | 63 | 40 | 59 | 20 | 4 |
| Durchstoßarbeit, gepreßt [Nm] | 27 | 37 | 25 | 34 | 38 | 14 | 16 | 18 | 27 | 9 | 13 |
| Zug-E-Modul, gespritzt [N/mm$^2$] | 1150 | 1160 | 1170 | 1200 | 1200 | 1220 | 1170 | 1240 | 1140 | 840 | 1220 |
| Streckspannung, gespritzt [N/mm$^2$] | 24 | 24 | 22 | 24 | 24 | 21 | 22 | 27 | 25 | 20 | 22 |
| Reißdehnung, gespritzt [%] | 103 | 66 | 94 | 94 | 96 | 58 | 78 | 85 | 92 | 52 | 21 |
| Durchstoßarbeit, gespritzt [Nm] | 26 | 12 | 20 | 26 | 27 | 7 | 9 | 17 | 25 | 7 | 10 |

Tabelle 2

| Beispiel Vergleichsversuch | | 6 | 7 | V7 |
|---|---|---|---|---|
| Komponente | [Gew.-%] | A 51 | A 51 | A 51 |
| Komponente | [Gew.-%] | B2 41 | B2 41 | B2 41 |
| Komponente | [Gew.-%] | C1 8 | C2 8 | C7 8 |
| | | | | |
| Zug-E-Modul, gepreßt | $[N/mm^2]$ | 1440 | 1400 | 1420 |
| Streckspannung, gepreßt | $[N/mm^2]$ | 22 | 19 | 22 |
| Reißdehnung, gepreßt | [%] | 60 | 23 | 43 |
| Durchstoßarbeit, gepreßt | [Nm] | 19 | 16 | 23 |
| | | | | |
| Zug-E-Modul, gespritzt | $[N/mm^2]$ | 1750 | 1780 | 1770 |
| Streckspannung, gespritzt | $[N/mm^2]$ | 32 | 32 | 32 |
| Reißdehnung, gespritzt | [%] | 57 | 52 | 50 |
| Durchstoßarbeit, gespritzt | [Nm] | 16 | 8 | 16 |

Tabelle 3

| | Beispiel | | Vergleichsversuch | | |
|---|---|---|---|---|---|
| | 8 | 9 | V8 | V9 | V10 |
| Komponente [Gew.-%] | A 53 | A 53 | A 53 | A 53 | A 53 |
| Komponente [Gew.-%] | B3 41 | B3 41 | B3 41 | B3 41 | B3 41 |
| Komponente [Gew.-%] | C1 6 | C3 6 | C4 6 | C5 6 | C8 6 |
| | | | | | |
| Zug-E-Modul, gepreßt [N/mm²] | 690 | 610 | 730 | 700 | 530 |
| Streckspannung, gepreßt [N/mm²] | 15 | 15 | 15 | 15 | 10 |
| Reißdehnung, gepreßt [%] | 55 | 50 | 14 | 17 | 25 |
| Durchstoßarbeit, gepreßt [Nm] | 24 | 23 | 5 | 4 | 14 |
| | | | | | |
| Zug-E-Modul, gespritzt [N/mm²] | 960 | 1040 | 1090 | 1010 | 850 |
| Streckspannung, gespritzt [N/mm²] | 22 | 21 | 18 | 20 | 19 |
| Reißdehnung, gespritzt [%] | 125 | 90 | 20 | 21 | 61 |

Tabelle 4

| | | Beispiel | | | | Vergleichsversuch | |
|---|---|---|---|---|---|---|---|
| | | 10 | 11 | 12 | 13 | V11 | V12 |
| Komponente | [Gew.-%] | A 51 | A 51 | A 51 | A 51 | A 51 | A 51 |
| Komponente | [Gew.-%] | B4 41 | B4 41 | B4 41 | B4 41 | B4 41 | B4 41 |
| Komponente | [Gew.-%] | C1 8 | C3 8 | C10 8 | C11 8 | C7 8 | C8 8 |
| Zug-E-Modul, gepreßt | [N/mm²] | 1180 | 1140 | 1100 | 1170 | 1230 | 740 |
| Streckspannung, gepreßt | [N/mm²] | 25 | 24 | 25 | 25 | 25 | 13 |
| Reißdehnung, gepreßt | [%] | 66 | 72 | 91 | 77 | 9 | 12 |
| Durchstoßarbeit, gepreßt | [Nm] | 18 | 16 | 17 | 28 | 5 | 5 |

10

Tabelle 5

| Beispiel<br>Vergleichsversuch | | 14 | 15 | 16 | 17 | V12 |
|---|---|---|---|---|---|---|
| Komponente | [Gew.-%] | A 52 | A 52 | A 52 | A 52 | A 56,5 |
| Komponente | [Gew.-%] | B1 20 | B1 20 | B1 10 | B1 13,3 | B1 14,5 |
| Komponente | [Gew.-%] | B2 20 | | B2 20 | B2 13,3 | B2 14,5 |
| Komponente | [Gew.-%] | | B3 20 | B3 10 | B2 13,3 | B3 14,5 |
| Komponente | [Gew.-%] | C11 8 | C11 8 | C11 8 | C11 8 | |
| | | | | | | |
| Zug-E-Modul, gepreßt | [N/mm$^2$] | 1010 | 990 | 1100 | 1070 | 1210 |
| Streckspannung, gepreßt | [N/mm$^2$] | 21 | 21 | 22 | 21 | – |
| Reißdehnung, gepreßt | [%] | 111 | 91 | 91 | 78 | 1 |
| Durchstoßarbeit, gepreßt | [Nm] | 38 | 29 | 31 | 30 | 1 |
| | | | | | | |
| Zug-E-Modul, gespritzt | [N/mm$^2$] | 1325 | 1380 | 1380 | 1380 | 1550 |
| Streckspannung, gespritzt | [N/mm$^2$] | 29 | 29 | 31 | 31 | 33 |
| Reißdehnung, gespritzt | [%] | 94 | 73 | 86 | 86 | 7 |
| Durchstoßarbeit, gespritzt | [Nm] | 38 | 19 | 18 | 16 | 2 |

**Patentansprüche**

1. Thermoplastische Formmasse, bestehend aus, jeweils bezogen auf die Summe der Bestandteile A, B, C und D,

A:     5 bis 94 Gew.-% Styrol und/oder substituieres Styrol enthaltendem Polymerisat A,

B:     5 bis 94 Gew.-% Polyolefin B,

C:     1 bis 20 Gew.-% eines durch anionische Polymerisation hergestellten, selektiv hydrierten oder teilhydrierten Blockcopolymerisats C, das aus mindestens einem aus Styrol aufgebauten Block und mindestens einem vor der Hydrierung Isopren enthaltenden Block besteht und dessen Styrol-Gehalt zwischen 45 und 85 Gew.-% liegt, und

D:     bis 19 Gew.-% eines weiteren durch anionische Polymerisation aus Styrol und Butadien und/oder Isopren hergestellten Blockcopolymerisats D mit mehr als zwei Blockeinheiten.

2.  Formmasse nach Anspruch 1, enthaltend als Blockcopolymerisat C ein Styrol-Dien-Styrol-Dreiblockcopolymerisat.

3.  Formmasse nach Anspruch 2, enthaltend als Blockcopolymerisat C ein Dreiblockcopolymerisat, dessen Dienblock ausschließlich aus Isopren aufgebaut wurde.

4.  Formmasse nach Anspruch 1, enthaltend als Blockcopolymerisat D ein Blockcopolymerisat mit einem Styrolgehalt zwischen 45 und 85 Gew.-%.

5.  Formmasse nach Anspruch 4, enthaltend als Blockcopopolymerisat D ein aus Styrol und Butadien hergestelltes Blockcopolymerisat.

6.  Formmasse nach Anspruch 5, enthaltend als Blockcopolymerisat D ein Styrol-Butadien-Styrol-Dreiblockcopolymerisat.

7.  Formmasse nach Anspruch 1, dadurch gekennzeichnet, daß das Verhältnis von Blockcopolymerisat C zu Blockcopolymerisat D zwischen 1 : 1 und 1 : 9 liegt.

8.  Formmasse nach Anspruch 1, enthaltend als Polyolefin B Polyethylen.

9.  Formmasse nach Anspruch 1, enthaltend als Polyolefin B Polypropylen.

10. Formmasse nach Anspruch 1, enthaltend als Polyolefin B Polyethylen hoher Dichte (HDPE), Polyethylen niedriger Dichte (LDPE), lineares Polyethylen niedriger Dichte (LLDPE) oder Polypropylen oder eine Mischung dieser Polyolefine.

11. Formmasse nach Anspruch 1, enthaltend als Styrolpolymerisat A schlagfestes Polystyrol.

12. Formmasse nach Anspruch 1, enthaltend jeweils 30 bis 80 Gew.-% A und B.

13. Formmasse nach Anspruch 1, enthaltend - bezogen auf 100 Teile A + B + C + D bis 50 Gew.-Teile übliche Zusatzstoffe.

14. Verwendung der Formmasse nach Anspruch 1 zur Herstellung von Formteilen.

15. Verwendung einer Blockcopolymermischung aus 5 bis 95 Gew.-% eines durch anionische Polymerisation hergestellten, selektiv hydrierten oder teilhydrierten Blockcopolymerisats C, das aus mindestens einem aus Styrol aufgebauten Block und mindestens einem vor der Hydrierung Isopren enthaltenden Block besteht und dessen Styrol-Gehalt zwischen 45 und 85 Gew.-% liegt und 5 bis 95 Gew.-% eines weiteren durch anionische Polymerisation aus Styrol und Butadien und/oder Isopren hergestellten blockcopolymerisats D, dessen Styrol-Gehalt ebenfalls zwischen 45 und 85 Gew.-% liegt, zur Verbesserung der Eigenschaften einer ein Styrolpolymerisat A und ein Polyolefin B enthaltenden Polymermischung.

16. Verwendung einer Blockcopolymermischung nach Anspruch 15, enthaltend als Blockcopolymerisat C ein Styrol-Dien-Styrol-Dreiblockcopolymerisat.

17. Verwendung einer Blockcopolymermischung nach Anspruch 16, enthaltend als Blockcopolymerisat C ein Dreiblockcopolymerisat, dessen Dienblock ausschließlich aus Isopren aufgebaut wurde.

**18.** Verwendung einer Blockcopolymermischung nach Anspruch 15, enthaltend als Blockcopolymerisat D ein aus Styrol und Butadien hergestelltes Blockcopolymerisat.

**19.** Verwendung einer Blockcopolymermischung nach Anspruch 18, enthaltend als Blockcopolymerisat D ein Styrol-Butadien-Styrol-Dreiblockcopolymerisat.

**20.** Verwendung einer Blockcopolymermischung nach Anspruch 15, deren Verhältnis von Blockcopolymerisat C zu Blockcopolymerisat D zwischen 1 : 1 und 1 : 9 liegt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-4 560 727 (J.R. CROSSAN)<br>* Spalte 2, Zeile 7 - Zeile 22 *<br>* Spalte 3, Zeile 18 - Zeile 25 * | 1,2,8,10 | C08L25/04<br>C08L23/02<br>//(C08L25/04, |
| A | * Spalte 3, Zeile 28 - Zeile 37 *<br>* Spalte 3, Zeile 38 - Zeile 48 *<br>* Ansprüche 1-5 *<br>--- | 1,3 | 23:02,53:02) |
| X | DATABASE WPI<br>Week 9133,<br>Derwent Publications Ltd., London, GB;<br>AN 91-242325<br>& JP-A-3 157 436 (MITSUI TOATSU) 5. Juli 1991<br>* Zusammenfassung *<br>--- | 1-3 | |
| P,X | EP-A-0 546 356 (BASF)<br>* Seite 2, Zeile 49 - Zeile 53 *<br>* Seite 3, Zeile 25 - Zeile 30 *<br>* Ansprüche 1-7,9-11 *<br>--- | 1 | |
| A | EP-A-0 289 926 (BASF)<br>* Seite 2, Zeile 34 - Zeile 51 *<br>* Seite 3, Zeile 56 - Seite 4, Zeile 23 *<br>* Ansprüche 1-3,7 *<br>----- | 1-3,13 | **RECHERCHIERTE SACHGEBIETE (Int.Cl.5)**<br><br>C08L |

Der vorliegende Recherchenbericht wurde für alle Patentansprüche erstellt

| Recherchenort | Abschlußdatum der Recherche | Prüfer |
|---|---|---|
| DEN HAAG | 27. Oktober 1993 | ENGEL, H |